## Europäisches Patentamt
## European Patent Office
## Office européen des brevets

(11) Veröffentlichungsnummer: **0 039 891**
**A1**

(12) **EUROPÄISCHE PATENTANMELDUNG**

(21) Anmeldenummer: **81103412.3**

(22) Anmeldetag: **06.05.81**

(51) Int. Cl.³: **A 01 B 45/00**
**A 01 B 39/10**

(30) Priorität: **08.05.80 DE 3017593**

(43) Veröffentlichungstag der Anmeldung:
**18.11.81 Patentblatt 81/46**

(84) Benannte Vertragsstaaten:
**AT BE CH DE FR GB IT LI NL SE**

(71) Anmelder: **Intergreen AG**
**Grabenring 8**
**CH-4123 Allschwil(CH)**

(72) Erfinder: **Hohenschläger, Alois**
**Hermann-Hesse-Strasse 2**
**D-7130 Mühlacker(DE)**

(74) Vertreter: **Twelmeier, Ulrich, Dipl.Phys. et al,**
**Patentanwälte Dr. Rudolf Bauer,Dipl.-Ing.Helmut**
**Hubbuch Dipl.Phys. Ulrich Twelmeier Dipl.Phys. Ulrich**
**Twelmeier Westliche 29-31**
**D-7530 Pforzheim(DE)**

(54) **Vorrichtung zum Tiefenlockern von Rasenplätzen.**

(57) Es wird eine Vorrichtung zum Tiefenlockern von Rasenplätzen beschrieben, welche zwei Gruppen (11,12) von gegenläufig durch einen (16) oder zwei (30,31) Schwingantriebe angetriebene Lockerungsscharen (9) aufweist. Die Vorrichtung zeichnet sich durch hohen Wirkungsgrad bei relativ geringem Kraftbedarf aus.

Fig. 2

EP 0 039 891 A1

- 1 -

Vorrichtung zum Tiefenlockern von Rasenplätzen

Die Erfindung befaßt sich mit einer Vorrichtung zum Tiefenlockern von Rasenplätzen gemäß dem Oberbegriff des Anspruchs 1.

Zum Tiefenlockern von landwirtschaftlich genutzten Böden sind Vorrichtungen bekannt, die zumeist feststehende Lockerungsschare mit einem verbreiterten Fuß besitzen (DE-GM 75 34 108, DE-GM 76 12 781). Wird eine solche Vorrichtung mittels eines Traktors durch den Erdboden gezogen, so wird die Erdoberfläche aufgebrochen und das Erdreich durch den verbreiterten Fuß aufgeworfen. Was bei Ackerland erwünscht sein mag, ist jedoch bei Rasenplätzen nicht vertretbar. Würde eine derartige Vorrichtung nämlich auch zum Tiefenlockern von Rasenplätzen benutzt, so würde auch die Grasnarbe stark aufgerissen und aufgeworfen, also in starkem Ausmaß beschädigt und obendrein uneben.

Ein anderes Problem bei Tiefenlockerern liegt in der hohen Zugkraft, die von einem Traktor aufgebracht werden muß, um einen Tiefenlockerer durch den Erdboden zu ziehen. Beim Tiefenlockern von Rasenplätzen ist dieses Problem besonders schwerwiegend, da die dichte Grasnarbe den Lockerungsscharen zusätzlich Widerstand entgegensetzt. Um die erforderliche Zugkraft zu vermindern, ist es für zum Lockern von landwirtschaftlich genutzten

- 2 -

Böden bestimmte Tiefenlockerer bereits vorgeschlagen worden (DE-OS 27 13 981), die Lockerungsschare durch eine Vibrationseinheit in Schwingungen
zu versetzen.

Zum Vertikutieren von Rasenplätzen ist es bekannt,
mehrere rotierende Messer parallel zueinander anzuordnen und rotierend durch die Grasnarbe zu
führen. Auf diese Weise wird der Boden aber nur
unwesentlich gelockert, vielmehr nur glatt geschnitten. Auch ist der Tiefgang der Vertikutiergeräte für eine Tiefenlockerung nicht ausreichend.

Zum Tiefenlockern von Rasenplätzen ist es ferner
bekannt, in einem fahrbaren, von einem Schlepper
gezogenen Rahmen eine Scheibenseche bestehend aus
einer Reihe von drei parallel zueinander und
parallel zur Fahrtrichtung angeordneten Scheiben
und hinter der Scheibenseche eine Reihe von drei
sichelförmigen Lockerscharen vorzusehen, die mit
den Scheiben der Scheibenseche fluchten und deren
Spitzen i.w. in Fahrtrichtung weisen. Die Lockerschare werden durch ein Schüttergetriebe sowohl
in vertikale als auch in horizontale Bewegung versetzt und die den Lockerscharen vorangestellten
Scheiben schneiden die Grasnarbe glatt auf, bevor
die Lockerschare den Boden tief lockern. Dieser
bekannte Tiefenlockerer hat noch verschiedene Nachteile. Zum einen kann durch die nach vorn weisenden Spitzen der Lockerschare ein gewisser Aufwurf
erfolgen, der die Ebenflächigkeit des Rasenplatzes
vermindert. Zum andern ist die erforderliche Zugkraft nach wie vor zu groß. Das bekannte Gerät weist nur drei Lockerschare nebeneinander auf und seine Arbeitsbreite ist damit kleiner als die Spurbreite des ziehenden Schleppers. Bei stark verdichtetem Boden kann es sogar erforderlich sein, von den drei Lockerscharen eine oder zwei Schare abzunehmen, um die erforderliche Zugkraft an die Schlepperleistung anzupassen. In der Praxis bedeutet dies, daß zum einen der Zeitaufwand zum Lockern einer vorgegebenen Rasenfläche hoch ist und daß zum andern der Schlepper wegen der geringen Arbeitsbreite des Tiefenlockerers den bereits gelockerten Boden überfahren muß und dadurch erneut verdichtet.

Der Erfindung liegt die Aufgabe zugrunde, einen für Rasenplätze geeigneten Tiefenlockerer mit gutem Wirkungsgrad und relativ geringem Zugkraftbedarf zu schaffen, sodaß eine große Arbeitsbreite möglich wird.

Die Erfindung löst diese Aufgabe durch eine Vorrichtung mit den in Anspruch 1 angegebenen Merkmalen. Vorteilhafte Weiterbildungen der Erfindung sind Gegenstand der Unteransprüche.

Durch das gegenläufige Antreiben der Lockerschare ist es überraschend gelungen, die erforderliche Zugkraft deutlich zu senken. So ist es ohne weiteres möglich, z.B. eine Vorrichtung mit einer Arbeitsbreite von 2 m zu bauen, die in Abständen

- 4 -

von zehn Zentimetern als Lockerschare 4 bis 7 mm dicke ebene Bleche besitzt, die etwa 12 - 20 cm tief in die Rasentragschicht eindringen und etwa 10 bis 15 cm breit sind. Eine solche Vorrichtung zum Tiefenlockern kann von einem durchschnittlichen Schlepper noch gezogen werden. Dabei kann die bodenlockernde Wirkung durchaus als gut bezeichnet werden und die Rasendecke wird dabei sauber aufgeschnitten, aber nicht grob aufgebrochen und zerrissen. Ein weiterer bedeutender Vorteil der Erfindung liegt darin, daß die Schwingungsbelastung der Vorrichtung gegenüber der Schwingungsbelastung bekannter Tiefenlockerer stark reduziert ist, weil sich die Belastungen infolge der gegenläufigen Schwingungen weitgehend kompensieren.

Die Lockerschare sind vorzugsweise so angeordnet, daß jede Lockerschar der einen Gruppe in Zugrichtung gesehen zwischen zwei Lockerscharen der anderen Gruppe liegt, zweckmäßig mitten zwischen ihnen. Zwar könnte man die Lockerschare der einen Gruppe in Zugrichtung fluchtend zu den Lockerscharen der anderen Gruppe anordnen, jedoch werden dann die beiden Gruppen unterschiedlich stark belastet und der Wirkungsgrad des Tiefenlockerers ist geringer als bei seitlich versetzter Anordnung der Lockerschare (Anspruch 2).

Zweckmäßig sind die Lockerschare untereinander gleich, am einfachsten ebene Bleche, die so dick sein müssen (einige Millimeter dick), daß sie den

- 5 -

mechanischen Belastungen beim Tiefenlockern standhalten, auch beim Auftreffen auf kleinere Steine
im Boden (Ansprüche 3 bis 5).

Der Antrieb der beiden Gruppen von Lockerscharen
kann mit Vorteil mit einem einzigen gemeinsamen
Antriebsaggregat erfolgen (Anspruch 6). Üblicherweise wird die Kraft, mit der die Lockerschare in
Schwingungen versetzt werden, von der Zapfwelle
des Schleppers abgeleitet und durch Getriebeelemente (Wellen, Riementriebe, Exzenterscheiben
und Kurbeltriebe) oder über einen Ölmotor auf die
Lockerschare übertragen.

Gemäß einer anderen vorteilhaften Ausführungsform
besitzen die beiden Gruppen von Lockerscharen je
einen eigenen Schwingantrieb, z.B. einen elektromotorisch angetriebenen Schubkurbelantrieb, und
die beiden Schwingantriebe sind derart miteinander
synchronisiert, daß die beiden Gruppen von Lockerscharen gegenläufig angetrieben sind (Anspruch 7).
Vorzugsweise erfolgt die Synchronisierung mittels
einer elektronischen Steuereinrichtung, insbesondere unter Verwendung eines Mikroprozessors (Anspruch 8). Die Verwendung von zwei getrennten,
nicht mechanisch synchronisierten Antrieben hat
den Vorteil, daß man leichter höhere Schwingfrequenzen erreichen kann als bei Verwendung nur eines
gemeinsamen Antriebsaggregates für beide Gruppen
von Lockerscharen (Anspruch 9).

- 6 -

Die beiden Gruppen von Lockerscharen können in einer Reihe nebeneinander angeordnet werden. Vorzugsweise werden sie jedoch in zwei Reihen hintereinander angeordnet, weil dies den konstruktiven Aufbau des Tiefenlockerers vereinfacht (Anspruch 10). Insbesondere ist es zweckmäßig, den Lockerscharen einer Gruppe eine gemeinsame waagerechte Schwenkachse zuzuordnen, z.B. in Gestalt einer Welle, um die die Lockerschare der jeweiligen Gruppen gemeinsam verschwenkt werden (Anspruch 11). Es ist aber auch durchaus möglich, jeder Lockerschar eine eigene Welle oder ein eigenes Zapfenpaar zuzuordnen, um die diese Lockerschar verschwenkbar ist. Die verschiedenen, einzeln gelagerten Lockerschare müssen dann durch ein geeignetes Gestänge mit dem Antriebsaggregat verbunden werden.

Vorzugsweise sind zwei waagerechte, parallele, um ihre Längsachse oder eine dazu parallele Achse verschwenkbare Balken vorgesehen, die quer zur Zugrichtung des Tiefenlockerers verlaufen und an denen jeweils die Lockerschare nur einer Gruppe befestigt sind (Anspruch 12). Diese Balken sind mit dem Antriebsaggregat verbunden und werden gegenläufig verschwenkt. Die Verbindung mit dem Antriebsaggregat kann auf verschiedene, zur Kraft- und Bewegungsübertragung bekannte Getriebeelemente geschehen. Vorzugsweise erstreckt sich von beiden Balken ein Arm nach oben und beide Arme sind durch je eine Kurbel mit einer angetriebenen Kurbelwelle oder mit zwei angetriebenen Exzenterscheiben verbunden, wobei die Kurbelzapfen bzw. die Anlenkpunkte der Kurbeln an den Exzenterscheiben einander radial gegenüberliegen, damit sich eine gegenläufige Schwingung der beiden Balken ergibt (Anspruch 13).

Um einen möglichen geringen Aufwurf der Rasenplatzoberfläche beim Tiefenlockern von vornherein zu verhindern, sind mit Vorteil zwischen den Lockerscharen zu diesen parallele, sich i.w. in Zugrichtung erstreckende Andrückelemente vorgesehen, welche während des Tiefenlockerns über die Oberfläche des Rasenplatzes geführt werden und einen sanften Druck auf diese ausüben, der so bemessen ist, daß er keine schädliche Verdichtung hervorruft, aber das Ausreissen von Rasen sodann verhindert und die Ebenflächigkeit der Oberfläche des Rasenplatzes gewährleistet (Anspruch 14). Ein solches Andrückelement kann zum Beispiel eine schmale Metallplatte sein, welche an beiden Enden mit Ketten oder dgl. am Rahmen des Tiefenlockerers aufgehängt ist; die Ketten müssen so lang sein, daß bei der vorgesehenen Eindringtiefe der Lockerschare (ca. 20 cm) die Platte satt auf der Oberfläche des Rasenplatzes aufliegt. Sie wird durch die Ketten bei der Vorwärtsbewegung des Tiefenlockerers mitgeschleppt (Anspruch 15).

Eine andere gute Möglichkeit, auf den Rasenplatz einen sanften, einen Aufwurf verhindernden Druck auszuüben, besteht darin, als Andrückelemente federnde Drähte, z.B. aus Federstahl, oder Blattfedern vorzusehen, welche nach oben schwach konkav

- 8 -

gespannt sind, also mit ihrer nach unten gewölbten Seite den Rasenboden andrücken (Anspruch 16). Der Andruck kann durch Änderung der Vorspannung der Federn variiert werden. Vorzugsweise sind die Andrückelemente auf einen leichten Montagerahmen vormontiert, um das schnelle Auswechseln einer ganzen Garnitur von Andrückelementen zu ermöglichen (Anspruch 17).

Eine besonders wirkungsvolle Tiefenlockerung erzielt man mit einer Vorrichtung, deren Lockerschare mit einem geringen, nur wenige Winkelgrade betragenden Winkel gegen die Zugrichtung angestellt sind (Anspruch 18), weil auf diese Weise auf den Erdboden auch eine quer zur Zugrichtung wirkende Vibrationskomponente übertragen wird. Besonders wirksam ist die Anstellung dann, wenn hintereinander angeordnete Lockerschare entgegengesetzt angestellt sind (Anspruch 16).

Ein bevorzugtes Ausführungsbeispiel ist schematisch in den drei beigefügten Zeichnungen beschrieben.

Figur 1 zeigt die wesentlichen Elemente einer Vorrichtung zum Tiefenlockern in der Ansicht von unten,

Figur 2 ist der Vertikalschnitt II-II durch die Vorrichtung gemäß Figur 1, und

Figur 3 ist eine Schnittansicht entsprechend Figur 2 durch eine Vorrichtung, welche statt eines Schwingantriebs zwei synchronisierte Schwingantriebe aufweist.

Die Vorrichtung zum Tiefenlockern umfaßt einen waagerechten, rechteckigen Rahmen 1 aus Hohlprofilstahl, der mittels nicht dargestellter Befestigungsmittel heb- und senkbar am Heck eines Schleppers befestigt wird. Im Geviert des Rahmens 1 sind zwei waagerechte Balken 2 und 3 angeordnet, welche quer zur Zugrichtung 4 verlaufen. Die Balken 2 und 3 sind drehbar auf waagerechten Wellen 5 und 6 gelagert, welche sich in Richtung der Längsachsen der Balken 2 und 3 erstrecken. Die äußeren Enden dieser Wellen 5 und 6 sind in den beiden Seitenprofilen 7 und 8 des Rahmens 1 gelagert.

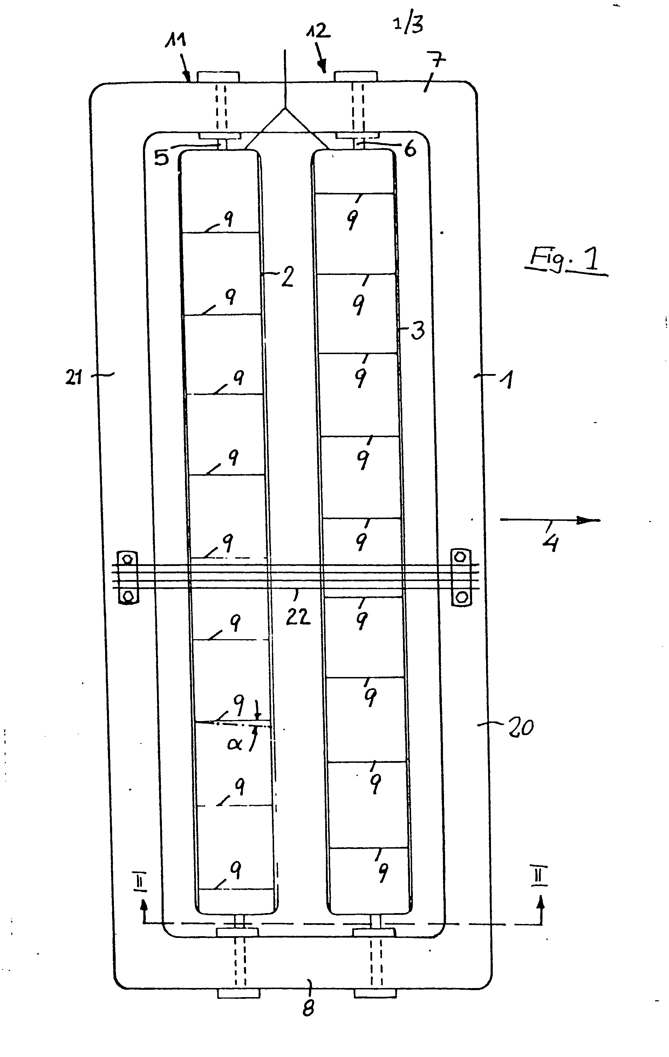

An der Unterseite der Balken 2 und 3 sind als Lockerschare 9 ebene Bleche lösbar befestigt, welche sich senkrecht nach unten und in Zugrichtung 4 erstrecken oder - wie in Figur 1 gestrichelt angedeutet - mit der Zugrichtung 4 einen geringen, nur wenige Winkelgrade betragenden Winkel $\alpha$ einschließen. Die Bleche 9 werden von oben nach unten allmählich schmaler, können jedoch von konstanter Dicke sein; es kann jedoch zweckmäßig sein, die Schneiden 10 der Bleche 9 etwas dünner zu halten.

Die Lockerschare 9 sind untereinander gleich groß, in gleichen Abständen und parallel zueinander angeordnet. Dabei ist die Gruppe 11 der am Balken 2 befestigten Lockerschare 9 so gegenüber der Gruppe 12 der am Balken 3 befestigten Lockerschare 9 versetzt angeordnet, daß bei Blick in Zugrichtung 4 in der Mitte zwischen zwei Lockerscharen 9 der einen Gruppe

- 10 -

11 bzw. 12 jeweils eine Lockerschar 9 der anderen Gruppe 12 bzw. 11 liegt.

Zur Erzielung einer guten Tiefenlockerung hat es sich als zweckmäßig erwiesen, die Lockerschare 9 an den Balken 1 und 2 in Abständen von ca. 20 cm anzuordnen, sodaß der Rasenplatz in Abständen von ca. 10 cm geschlitzt wird. Die Eindringtiefe der Lockerschare 9 in den Rasenplatz kann dadurch variiert werden, daß der Rahmen 1 mehr oder weniger stark vom Schlepper abgesenkt wird.

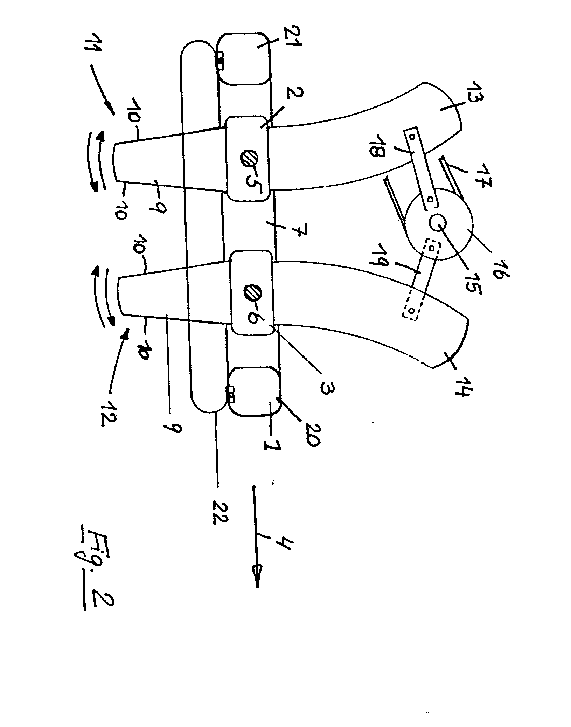

An der Oberseite sind beide Balken 1 und 2 mit je einem nach oben abstehenden Arm 13,14 starr verbunden. Zwischen den beiden Armen 13 und 14 ist auf einer kurzen Welle 15 eine Exzenterscheibe 16 drehbar gelagert. Die Exzenterscheibe 16 ist als Riemenscheibe ausgebildet und wird durch einen oder mehrere Riemen 17 (in Figur 2 nur angedeutet) angetrieben. Der Riementrieb stellt die Verbindung zu einer nicht gezeichneten Welle her, welche vom Schlepper durch Kopplung mit dessen Zapfwelle oder über einem Ölmotor angetrieben wird. Beide Arme 13 und 14 sind durch je eine Kurbel 18 und 19 mit i.w. einander radial gegenüberliegenden Anlenkpunkten der Exzenterscheibe 16 verbunden. Bei einer Drehung der Exzenterscheibe 16 werden folglich die Balken 2 und 3 und mit ihnen die Lockerschare 9 in eine gegenläufige Schwingungsbewegung versetzt. Die Lockerschare 9 schwingen dabei i.w. in Zugrichtung 4, bei geringer, für jede Gruppe 10, 11 vorzugsweise entgegengesetzt gerichteter Anstellung um einen

Winkel $\alpha$ gegen die Zugrichtung 4 aber auch quer
zur Zugrichtung 4, wodurch die Wirksamkeit der
Tiefenlockerung erhöht wird.

Um von vornherein einen etwaigen Aufwurf beim
Tiefenlockern zu verhindern, befinden sich zwischen
den Lockerscharen 9 i.w. waagerecht verlaufende
Stahlfedern 22 in Form von Drähten oder Bändern,
welche mit ihren Enden lösbar und in der Höhe und
in der Federspannung verstellbar am vorderen Profilbalken 20 und am hinteren Profilbalken 21 des
Rahmens 1 befestigt sind. Während des Tiefenlockerns
gleiten diese Federn 22 mit mäßigem Andruck über
die Oberfläche des Rasenplatzes. In Fig. 1 sind aus
Gründen der Übersichtlichkeit nur vier solche Federn
22 angedeutet.

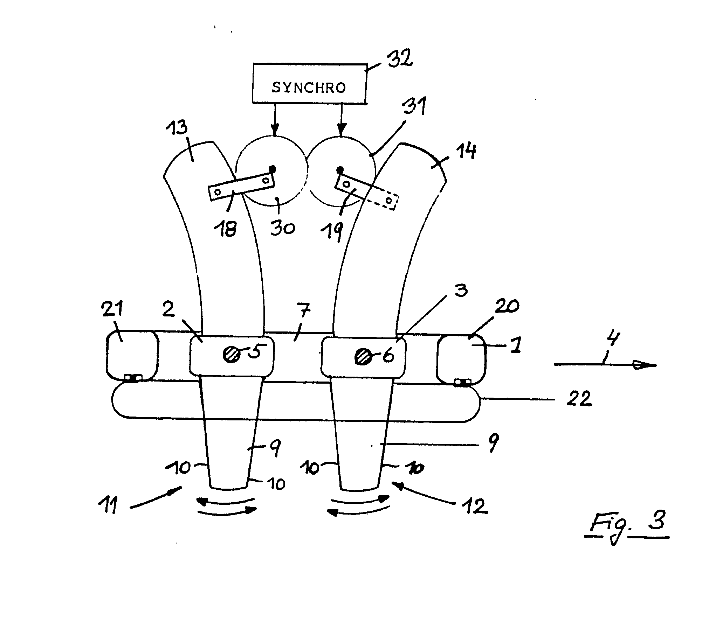

Mit dem in Figur 1 und Figur 2 dargestellten
Tiefenlockerer erreicht man Betriebsfrequenzen von
500 bis 1000 Schwingungen pro Minute. Verwendet man
jedoch, wie in Figur 3 angedeutet, für die beiden
Gruppen 11 und 12 von Lockerscharen 10 zwei getrennte Schwingantriebe, z.B. zwei elektromotorische Schubkurbelantriebe 30 und 31, welche durch
ein elektronisches Steuergerät 32 so synchronisiert
sind, daß die beiden Gruppen 11 und 12 im Gegentakt
schwingen, dann lassen sich auch leicht höhere
Schwingfrequenzen erreichen, vorzugsweise solche
zwischen 1200 und 2400 Schwingungen pro Minute.

Patentansprüche

1. Vorrichtung zum Tiefenlockern von Rasenplätzen mittels im wesentlichen in Zugrichtung schwingend angetriebenen und nebeneinander angeordneten, sich im wesentlichen in der Zugrichtung und in senkrechter Richtung von einer Halterung nach unten erstreckenden, flachen Lockerscharen, gekennzeichnet durch zwei Gruppen (11,12) von gegenläufig angetriebenen Lockerscharen (9).

2. Vorrichtung nach Anspruch 1, dadurch gekennzeichnet, daß in Zugrichtung (4) gesehen zwischen je zwei Lockerscharen (9) der einen Gruppe (11,12) eine Lockerschar (9) der anderen Gruppe (12,11) liegt.

3. Vorrichtung nach Anspruch 1 oder 2, dadurch gekennzeichnet, daß die Lockerschare (9) untereinander gleich sind.

4. Vorrichtung nach Anspruch 1, 2 oder 3, dadurch gekennzeichnet, daß die Lockerschare (9) ebene Bleche sind.

5. Vorrichtung nach einem der vorstehenden Ansprüche, dadurch gekennzeichnet, daß die Lockerschare (9) von oben nach unten schmaler werden.

6. Vorrichtung nach einem der vorstehenden Ansprüche, dadurch gekennzeichnet, daß die beiden Gruppen (11, 12) von Lockerscharen (9) durch einen gemeinsamen Antrieb (16,17) in Schwingung versetzt werden.

- 13 -

7. Vorrichtung nach einem der Ansprüche 1-5, dadurch gekennzeichnet, daß die beiden Gruppen (11,12) von Lockerscharen (9) durch zwei getrennte, jedoch miteinander synchronisierte Antriebe (30,31) in Schwingung versetzt werden.

8. Vorrichtung nach Anspruch 7, dadurch gekennzeichnet, daß die beiden Schwingantriebe (30,31) durch eine elektronische Steuereinrichtung (32), insbesondere eine solche unter Verwendung eines Mikroprozessors, synchronisiert sind.

9. Vorrichtung nach Anspruch 7 oder 8, dadurch gekennzeichnet, daß die Betriebsfrequenz zwischen 1.200 und 2.400 Schwingungen/Minute (20 bis 40 Hz) liegt.

10. Vorrichtung nach einem der vorstehenden Ansprüche, dadurch gekennzeichnet, daß die beiden Gruppen (11, 12) von Lockerscharen (9) in Zugrichtung (4) hintereinander angeordnet sind.

11. Vorrichtung nach Anspruch 10, dadurch gekennzeichnet, daß die Lockerschare (9) der einen und der anderen Gruppe (11,12) jeweils um eine gemeinsame, waagerechte Schwenkachse (5,6) verschwenkbar sind.

12. Vorrichtung nach Anspruch 11, dadurch gekennzeichnet, daß die Lockerschare (9) beider Gruppen (11, 12) an je einem waagerechten, quer zur Zugrichtung (4) verlaufenden und um eine parallel zu seiner Längsachse verlaufende Schwenkachse (5,6) verschwenkbaren Balken (2,3) befestigt sind, und daß beide Balken (2,3) mit dem Schwingantrieb (16,17) verbunden sind.

13. Vorrichtung nach Anspruch 12, dadurch gekennzeichnet, daß die beiden Balken (2,3) mit je einem sich nach oben erstreckenden Arm (13,14) versehen sind, der durch eine Kurbel (18,19) mit einer angetriebenen Kurbelwelle oder mit einer angetriebenen Exzenterscheibe (16) verbunden ist.

14. Vorrichtung nach einem der vorstehenden Ansprüche, dadurch gekennzeichnet, daß zwischen den Lockerscharen (9) und parallel zu ihnen verlaufend in Aufwärtsrichtung nachgiebige, nach unten weisende Andrückelemente (22) vorgesehen sind.

15. Vorrichtung nach Anspruch 14, dadurch gekennzeichnet, daß die Andrückelemente mit vorgegebenem Gewicht auf der Rasenplatzoberfläche aufliegende Gleitschuhe sind, welche an ihren Enden mit Ketten, Seilen, Drähten o. dgl. flexiblen Aufhängemitteln am Rahmen des Tiefenlockerers befestigt sind.

16. Vorrichtung nach Anspruch 14, dadurch gekennzeichnet, daß die Andrückelemente (22) Blattfedern oder federnde Drähte sind, die mit ihren beiden Enden am Rahmen (1) des Tiefenlockerers befestigt sind.

17. Vorrichtung nach Anspruch 14, dadurch gekennzeichnet, daß die Andrückelemente (22) auf einen Montagerahmen vormontiert sind.

18. Vorrichtung nach einem der vorstehenden Ansprüche, dadurch gekennzeichnet, daß die Lockerschare mit einem geringen, nur wenige Winkelgrade betragenden

- 15 -

Winkel $\alpha$ gegen die Zugrichtung (4) angestellt
sind.

19. Vorrichtung nach Anspruch 10 und 18, dadurch gekennzeichnet, daß die Lockerschare (9) der einen
Gruppe (11) entgegengesetzt angestellt sind wie
die Lockerschare (9) der anderen Gruppe.

Fig. 1

0039891

Fig. 2

Fig. 3

Europäisches Patentamt

**EUROPÄISCHER RECHERCHENBERICHT**

**0039891**
Nummer der Anmeldung

EP 81 10 3412

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - C - 831 466</u> (GESELLSCHAFT FÜR AGRIKULTUR UND TECHNIK)<br>* Seite 1, Zeilen 1-19; Seite 2, Zeilen 27-88; Seite 3, Zeilen 16-126; Seite 4, Zeilen 1-13, 56-80; Figuren 1-10 * | 1-4,6, 9-13, 18 |
| X | <u>FR - A - 454 263</u> (BAUCHE)<br>* Das ganze Dokument * | 1,3,6, 11,12 |
| X | <u>FR - E - 18 228</u> (BAUCHE)<br>* Das ganze Dokument * | 1,2,3, 6,10, 11-13 |
| | <u>GB - A - 1 183 191</u> (SHARMAN)<br>* Seite 1, Zeilen 52-90; Seite 2, Zeilen 1-34; figuren 1,2 * | 1,3,6, 10-12 |
| | <u>FR - A - 2 326 848</u> (SKOGSSTYRELSEN)<br>* Seite 2, Zeile 3 - Seite 8, Zeile 40; Figuren 1,2 * | 4,5,11, |
| | <u>US - A - 3 643 747</u> (TAYLOR)<br>* Das ganze Dokument * | 4,5 |
| | <u>GB - A - 229 102</u> (RANSOMES SIMS AND JEFFERIES LTD.)<br>* Seite 3, Zeilen 3-51; Figuren 1,2,3 * | 3,4, 14,15 |

**KLASSIFIKATION DER ANMELDUNG** (Int. Cl.³)

A 01 B 45/00
          39/10

**RECHERCHIERTE SACHGEBIETE** (Int. Cl.³)

A 01 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-07-1981 | VERDOODT |

EPA form 1503.1   06.78